# EUROPÄISCHE PATENTSCHRIFT

(11) **EP 0 848 591 B1**
(45) Veröffentlichungstag und Bekanntmachung des Hinweises auf die Patenterteilung: **30.05.2001**
(21) Anmeldenummer: 96930156.3
(22) Anmeldetag: 03.09.1996
(51) Int. Cl.: A23F 5/16, A23F 5/02

(54) **VERFAHREN ZUR BEHANDLUNG VON ROHKAFFEE**
METHOD OF TREATING RAW COFFEE
PROCEDE DE TRAITEMENT DE CAFE VERT

(30) Priorität: 04.09.1995 DE 19532585
(43) Veröffentlichungstag der Anmeldung: 24.06.1998
(73) Patentinhaber: CR3-KAFFEEVEREDELUNG M.HERMSEN GMBH. & CO., D-28237 Bremen (DE)
(72) Erfinder: HERMSEN, Manfred, D-27367 Hellwege (DE)
(74) Vertreter: Maiwald, Walter, Dr. Dipl.-Chem.
(86) Internationale Anmeldenummer: EP9603862
(87) Internationale Veröffentlichungsnummer: WO9708957

(56) Entgegenhaltungen:
- EP-A- 0 425 824
- DE-A- 4 402 989
- DE-C- 576 515
- FR-A- 406 695
- FR-A- 1 062 272
- US-A- 3 767 418
- US-A- 4 671 964

## Beschreibung

Die Erfindung betrifft ein Verfahren zur Behandlung von Rohkaffee gemäß dem Oberbegriff des Anspruches 1. Weiterhin betrifft die Erfindung die Verwendung dieses Verfahrens zu einem anderen Zweck, bei Rohkaffeesorten der Art Arabica.

Man unterscheidet zwischen zwei Arten von Kaffee mit weltwirtschaftlicher Bedeutung, nämlich Arabica und Robusta, die sich wiederum jeweils in verschiedene Sorten unterteilen. Arabica-Kaffee wird generell vom Verbraucher wegen seines milderen und aromatischeren Charakters gegenüber Robusta-Kaffee bevorzugt. Dementsprechend wird Robusta-Kaffee wegen seines typischen strengen und bitteren Geschmacks von den meisten Verbrauchern weniger geschätzt.

Im Stand der Technik finden sich mehrere Vorschläge, um den sortentypischen Geschmack von Robusta-Kaffees durch eine Behandlung mit Wasserdampf zu verbessern. So lehrt die US-Patentschrift 3 767 418 eine Behandlung von Robusta-Rohkaffee, bei der der Kaffee zunächst auf 30 % bis 65 % Feuchtigkeitsgehalt gebracht und dann bei Drücken zwischen 3,4 und 9,7 bar mit Wasserdampf behandelt wird. Die Behandlungstemperatur liegt zwischen 116°C und 177°C, vorzugsweise zwischen 155°C und 175°C. Die Wasserdampfbehandlung soll eine bis zehn Minuten dauern.

Gemäß EP-A2 0 234 712 wird ebenfalls eine sehr hohe Anfangsfeuchtigkeit, von 35 % bis 45 %, vorgegeben. Die Dampfbehandlung erfolgt bei Drücken zwischen 2,1 und 4,1 bar und Temperaturen zwischen 134°C und 148°C, über noch kürzere Zeiträume zwischen 0,5 min und 4 min.

Die EP-B1 0 282 345 schlägt vor, Robusta-Rohkaffee unter Zusatz von Säuren, wie beispielsweise Essigsäure, mit Sattdampf zu behandeln; auch diese Behandlung soll etwa eine bis fünfzehn Minuten dauern und erfolgt typischerweise bei Temperaturen zwischen 110°C und 135°C.

Gemäß den europäischen Patentanmeldungen EP-A2 0 366 895 und 0 366 896 soll Robusta-Kaffee bei einer Anfangsfeuchtigkeit von 25 % bis 30 % bzw.45 % und relativ niedrigen Drücken bei sehr hohen Temperaturen (150°C bis 180°C bzw. 195°C) kurzzeitig unter Inertgas erhitzt werden. Als Inertgas wird inbesondere CO₂ verwendet.

Aus der EP-Al 0 425 824 ist der Vorschlag bekannt, aus Robusta-Rohkaffee mit Wasserdampf bei erhöhter Temperatur und erhöhtem Druck gezielt Aromastoffe, wie insbesondere 2-Methylisoborneol zu entfernen. Zu diesem Zweck wird wiederum eine recht hohe Eingangsfeuchte des Rohkaffees, zwischen 30 % und 45 %, eingestellt, und der Kaffee dann bei Drücken zwischen 3 und 4 bar und Temperaturen zwischen 135°C und 140°C 40 min bis 120 min behandelt.

Aus der DE-OS 44 02 989 ist es bekannt, rohen Robusta-Kaffee mit geringerer Anfangs feuchte, im Bereich 15 % bis 20 %, während sehr langer Behandlungszeit (160 min bis 210 min) bei relativ geringem Druck (2,5 bis 4 bar) und Temperaturen von 135°C bis 145°C zu behandeln.

Allen diesen bekannten Verfahren ist gemeinsam, daß sie sich die Verbesserung der sorteneigenen Geschmacks- und Aromamerkmale von Robusta-Rohkaffee zum Ziel setzen.

Ganz erhebliche andere Probleme bringt die Tatsache mit sich, daß sowohl Arabica- als auch Robusta-Kaffee häufig Geschmacksbeeinträchtigungen und Aromaschäden aufweist, die nicht sorteneigen sind, sondern vielmehr auf äußerliche Einflüsse während des Reife-, Ernte-, Aufbereitungsprozesses oder der anschließenden Lagerung zurückzuführen sind. Besonders problematisch in dieser Hinsicht sind Erscheinungen wie Fruchtigkeit, Fäulnis (Stinker) und andere Formen der Überfermentation, ferner Härte, Erdigkeit, Erbsigkeit, Ranzigkeit, Muffigkeit etc. Solche Schäden treten sortenunabhängig sowohl bei Arabica- als auch bei Robusta-Kaffee auf. Es handelt sich oft nur um einzelne Bohnen, die mit solchen Fehlern behaftet und äußerlich als solche nicht erkennbar sind, aber nichtsdestoweniger ganze Partien erheblich im Wert mindern können.

Die FR-A-1 062 272 offenbart ein Verfahren zur Reinigung und Geschmacksverbesserung von Rohkaffee, unter anderem auch von Rohkaffeechargen, die während des Reifeprozesses durch von Insekten übertragenen Pflanzenkrankheiten nicht sortentypische Beeinträchtigungen erfahren haben.

Das Verfahren umfaßt die Behandlung des Rohkaffees mit Wasserdampf bei einem Druck von bis zu 1,5 Atmosphären, wobei der Kaffee in Bewegung gehalten wird und ggf. einer anschließenden Neutralisation der durch die Behandlung freigesetzten Säuren. Exemplifiziert ist dabei eine Behandlung einer 1000 kg Rohkaffeecharge mit 50 l einer 1%-igen Carbonatlösung. Angaben zu der Behandlungsdauer oder -temperatur werden nicht gemacht.

Außer dem in der FR-A-1 062 272 offenbarten Verfahren, welches sich ganz speziell zur Reinigung und Geschmacksverbesserung von Rohkaffee eignet, der während des Reifeprozesses durch von Insekten übertragene Pflanzenkrankheiten geschmacklich beeinträchtigt wurde, betreffen die übrigen vorgenannten, im Stand der Technik bekannten Verfahren allesamt die Verbesserung der sorteneigenen Geschmacks- und Aromamerkmale von Robusta-Rohkaffee.

Es ist daher eine Aufgabe der vorliegenden Erfindung, ein Verfahren zur Behandlung von Rohkaffee zur Verfügung zu stellen, welches sich allgemein zur Beseitigung von nicht sortentypischen Geschmacks- und Aromabeeinträchtigungen eignet, die beim Reife-, Ernte- oder auch Aufbereitungsprozeß entstanden sind. Weitere Aufgaben ergeben sich aus der nachfolgenden Beschreibung der Erfindung.

Die Lösung der verfahrensbezogenen Aufgaben liegt in den Merkmalen des Anspruches 1.

Vorteilhafte Ausgestaltungen des erfindungsgemäßen Verfahrens sind in den Verfahrensunteransprüchen definiert.

Erfindungsgemäß wird jetzt ein Verfahren zur Behandlung von Rohkaffee zur Beseitigung von nicht sortentypischen, insbesondere beim Reife-, Ernte- oder Aufbereitungsprozeß entstandenen Geschmacks- und Aromabeeinträchtigungen zur Verfügung gestellt, welches dadurch gekennzeichnet ist, daß der Rohkaffee zunächst auf einen Feuchtigkeitsgehalt von wenigstens 15 % eingestellt und dann bei einer Temperatur oberhalb 100°C und bei einem Druck von wenigstens 2 bar mit Wasserdampf behandelt wird, bis die Beeinträchtigung in ausreichendem Maße beseitigt ist.

In einer bevorzugten Ausführungsform wird der Rohkaffee zunächst auf einen Feuchtigkeitsgehalt von mindestens 16 % und nicht mehr als 35 %, vorzugsweise zwischen 16 % und 30 % und insbesondere zwischen 16 % und 27 % eingestellt.

Weiter betrifft die Erfindung in einer bevorzugten Ausführungsform ein Verfahren, bei dem der Rohkaffee bei einem Druck von vorzugsweise wenigstens 3 bar und besonders bevorzugt oberhalb 4 bar behandelt wird.

In einer weiteren Ausführungsform wird der Rohkaffee bei einer Temperatur von wenigstens 130°C, vorzugsweise wenigstens 140°C und besonderes bevorzugt oberhalb 145°C behandelt.

In einer besonders bevorzugten Ausführungsform dauert die erfindungsgemäß vorgesehene Dampfbehandlung einschließlich der Druckaufbauphase wenigstens 30 min und vorzugsweise nicht mehr als 160 min, besonders bevorzugt nicht mehr als 120 min.

Weiterhin betrifft die Erfindung ein Verfahren, bei dem der befeuchtete Rohkaffee mit Sattdampf behandelt wird.

In einer weiteren bevorzugten Ausführungsform betrifft die Erfindung ein Verfahren, bei welchem der Rohkaffee zunächst auf eine Feuchte von zwischen 16 % und 18 % eingestellt und dann bei einem Druck zwischen 3,7 bar und 4 bar, vorzugsweise bei etwa 3,9 bar und einer Temperatur zwischen 140°C und 145°C, vorzugsweise bei 141°C bis 142°C während 90 min bis 150 min, vorzugsweise während etwa 120 min mit Sattdampf behandelt wird.

In einer weiteren bevorzugten Ausführungsform ist ein erfindungsgemäßes Verfahren vorgesehen, welches dadurch gekennzeichnet ist, daß der Rohkaffee zunächst auf eine Feuchte zwischen 16 % und 27 % eingestellt und dann bei einem Druck zwischen 4,5 bar und 5,0 bar, vorzugsweise bei etwa 4,7 bar und bei einer Temperatur zwischen 147°C und 153°C, vorzugsweise bei etwa 148°C bis 150°C für 90 min bis 150 min, vorzugsweise während 120 min mit Sattdampf behandelt wird.

In einer bevorzugten Ausführungsform, wird der erfindungsgemäß behandelte Rohkaffee bei der Behandlung bewegt.

In einer weiteren Ausführungsform betrifft die Erfindung ein Verfahren, bei dem der behandelte Rohkaffee nachfolgend auf einen der Eingangsfeuchte entsprechenden Feuchtigkeitsgehalt, vorzugsweise zwischen etwa 10 % und 12 %, getrocknet wird.

In einer besonders bevorzugten Ausführungsform handelt es sich bei dem erfindungsgemäß behandelten Rohkaffee um einen Robusta-Rohkaffee oder einen Arabica-Rohkaffee oder eine Mischung davon.

Weiter betrifft die Erfindung die Verwendung des erfindungsgemäßen Verfahrens zur Verbesserung des sortentypischen Geschmacks und/oder Aromas von Rohkaffeesorten der Art Arabica.

Geschmacks- und Aromabeeinträchtigungen, die auf äußere Einflüsse zurückzuführen sind, unterscheiden sich selbstverständlich von sorteneigenen unerwünschten Geschmacks-und Aromamerkmalen, die bei Robusta-Kaffee durch die bekannten Verfahren beseitigt werden sollen. Es ist daher überraschend, daß sich auf äußeren Einflüssen, d. h. vorwiegend unsachgemäßer Behandlung vor, während und nach der Ernte beruhende Fehler unabhängig von dem sorteneigenen/ typischen Charakter des Kaffees durch die erfindungsgemäße Dampfbehandlung beseitigen bzw. unschädlich machen lassen.

Bei dem erfindungsgemäßen Verfahren kann es im höheren Druck- und Temperaturbereich zu einer mehr oder minder deutlichen Erhöhung der Säure, die sich auch chemisch-analytisch nachweisen läßt, und aufgrund von Maillard-Reaktionen zur Bildung eines maggiartigen Beigeschmacks kommen. Diese an sich mindestens zum Teil unerwünschten Begleiterscheinungen des erfindungsgemäßen Verfahrens werden jedoch in einer Mischung von geröstetem, behandeltem und geröstetem, unbehandeltem Kaffee im Verhältnis von z. B. 1:3 nicht nur neutralisiert, sondern können überraschenderweise sogar genutzt werden, um unerwünschte Geschmacks- und Aromamerkmale bestimmter Sorten zu mildern, z. B. den strengen, gewöhnlichen Geschmack eines Indien Arabica Cherry oder das flache Aroma eines ungewaschenen Brasil-Kaffees.

In seltenen Fällen treten Geschmacks- und Aromafehler auf, die nicht auf besondere Einflüsse während der Wachstumsperiode oder während bzw. nach der Ernte des Kaffees zurückzuführen sind, sondern auf nicht optimale Standortbedingungen, wie z. B. ungünstige Bodenverhältnisse etc. Es handelt sich jedoch streng genommen nicht um sorteneigene Geschmacks- und Aromaeigenschaften, da diese Mängel nicht stets, also sortentypisch, auftreten. Das erfindungsgemäße Verfahren eignet sich ebenfalls zur Bearbeitung solcher Mängel.

Das erfindungsgemäße Verfahren kann insbesondere im niedrigeren Druck- und Temperaturbereich zur Verbesserung auch des sorteneigenen Geschmacks und Aromas bestimmter Arabica-Sorten eingesetzt werden, beispielsweise um einen indischen Arabica Cherry geschmacklich zu verbessern.

Im folgenden wird die Erfindung anhand zweier Ausführungsbeispielen näher erläutert.

### Beispiel 1:

In einem Druckbehälter werden während 120 Minuten 40 kg ungewaschener Ecuador Rohkaffee, der mit harten und überfermentierten (Stinker-) Fehlbohnen durchsetzt ist, bei einem Druck von 4,7 bar und einer Temperatur zwischen 149°C und 150°C behandelt. Der Druckbehälter wird dabei ständig von Sattdampf durchströmt. Während der Anfangs(Druckaufbau-)Phase werden 5 1 Wasser in den Behälter gegeben. Nach dem Ende der Behandlung und dem Ablassen des Drucks wird der Kaffee auf eine Feuchte von 11 % getrocknet.

Der behandelte und geröstete Ecuador Kaffee weist in der Tasse einen leicht maggiartigen und deutlich saureren, aber sonst völlig fehlerfreien und sauberen Geschmack auf. Nach Mischung mit einem gerösteten ungewaschenen Brasil-Kaffee (Santos) im Verhältnis 1:4 ergab die Tassenprobe, daß die Mischung merklich feiner und aromatischer in der Tasse als der reine Brasil-Kaffee war.

### Beispiel 2:

In einem Druckbehälter werden während 120 Minuten 40 kg indischer Arabica Cherry Rohkaffee bei einem Druck von 3,85 bar und einer Temperatur zwischen 141°C und 142°C behandelt. Der Druckbehälter wird dabei ständig von Sattdampf durchströmt. Während der Anfangs-(Druckaufbau)Phase werden 3 l Wasser in den Behälter gegeben. Nach dem Ende der Behandlung und dem Ablassen des Drucks wird der Kaffee auf eine Feuchte von 11 % getrocknet.

Der behandelte und geröstete indische Arabica Cherry Kaffee weist in der Tasse einen deutlich angenehmeren, weniger strengen Geschmack auf als der unbehandelte.

## Patentansprüche

1. Verfahren zur Behandlung von Rohkaffee zur Beseitigung von nicht sortentypischen, insbesondere beim Reife-, Ernte- oder Aufbereitungsprozeß entstandenen Geschmacks- und Aromabeeinträchtigungen,
**dadurch gekennzeichnet, daß** der Rohkaffee zunächst auf einen Feuchtigkeitsgehalt von wenigstens 15 % eingestellt und dann bei einer Temperatur oberhalb 100°C und bei einem Druck von wenigstens 2 bar mit Wasserdampf behandelt wird, bis die Beeinträchtigung in ausreichendem Maße beseitigt ist.

2. Verfahren nach Anspruch 1,
**dadurch gekennzeichnet,** daß der Rohkaffee zunächst auf einen Feuchtigkeitsgehalt von mindestens 16 % und nicht mehr als 35 %, vorzugsweise zwischen 16 % und 30 % und insbesondere zwischen 16 % und 27 % eingestellt wird.

3. Verfahren nach einem der Ansprüche 1 oder 2,
**dadurch gekennzeichnet,** daß der Rohkaffee bei einem Druck von vorzugsweise wenigstens 3 bar und besonders bevorzugt oberhalb 4 bar behandelt wird.

4. Verfahren nach einem der Ansprüche 1 bis 3,
**dadurch gekennzeichnet,** daß der Rohkaffee bei einer Temperatur von wenigstens 130°C, vorzugsweise wenigstens 140°C und besonders bevorzugt oberhalb 145°C behandelt wird.

5. Verfahren nach einem der Ansprüche 1 bis 4,
**dadurch gekennzeichnet,** daß die Dampfbehandlung einschließlich der Druckaufbauphase wenigstens 30 min und vorzugsweise nicht mehr als 160 min, besonders bevorzugt nicht mehr als 120 min dauert.

6. Verfahren nach einem der Ansprüche 1 bis 5,
**dadurch gekennzeichnet,** daß der befeuchtete Rohkaffee mit Sattdampf behandelt wird.

7. Verfahren nach einem der Ansprüche 1 bis 6,
**dadurch gekennzeichnet,** daß der Rohkaffee zunächst auf eine Feuchte von zwischen 16 % und 18 % eingestellt und dann bei einem Druck zwischen 3,7 und 4 bar, vorzugsweise bei etwa 3,9 bar und einer Temperatur zwischen 140°C und 145°C, vorzugsweise bei 141°C bis 142°C während 90 min bis 150 min, vorzugsweise während etwa 120 min mit Sattdampf behandelt wird.

8. Verfahren nach einem der Ansprüche 1 bis 6,
**dadurch gekennzeichnet,** daß der Rohkaffee zunächst auf eine Feuchte zwischen 16 % und 27 % eingestellt und dann bei einem Druck zwischen 4,5 und 5,0 bar, vorzugsweise bei etwa 4,7 bar und einer Temperatur zwischen 147°C und 153°C, vorzugsweise bei etwa 148°C bis 150°C für 90 min bis 150 min, vorzugsweise während 120 min mit Sattdampf behandelt wird.

9. Verfahren nach einem der Ansprüche 1 bis 8,
**dadurch gekennzeichnet,** daß der Rohkaffee bei der Behandlung bewegt wird.

10. Verfahren nach einem der Ansprüche 1 bis 9,
**dadurch gekennzeichnet,** daß der behandelte Rohkaffee nachfolgend auf einen der Eingangsfeuchte entsprechenden Feuchtigkeitsgehalt, vorzugsweise zwischen etwa 10 % und 12 %, getrocknet wird.

11. Verfahren nach einem der Ansprüche 1 bis 10,
**dadurch gekennzeichnet,** daß der Rohkaffee ein Robusta-Rohkaffee oder ein Arabica-Rohkaffee oder eine Mischung davon ist.

12. Verwendung des Verfahrens nach einem der Ansprüche 1 bis 10, zur Verbesserung des sortentypischen Geschmacks und/oder Aromas von Rohkaffeesorten der Art Arabica.

## Claims

1. Process for the treatment of raw coffee for removing non-characteristic impairments in taste and aroma which especially arise during ripening, harvesting or processing,
characterized in that the raw coffee is initially adjusted to a moisture content of at least 15 % and then is steamed at a temperature of more than 100°C and at a pressure of at least 2 bar until the impairment is sufficiently removed.

2. Process according to claim 1,
characterized in that the raw coffee is initially adjusted to a moisture content of at least 16 % and not more than 35 %, preferably between 16 % and 30 % and especially between 16 % and 27 %.

3. Process according to claims 1 or 2,
characterized in that the raw coffee is treated at a pressure of preferably at least 3 bar, and especially preferred at more than 4 bar.

4. Process according to any of claims 1 to 3,
characterized in that the raw coffee is treated at a temperature of at least 130°C, preferably at least 140°C and especially preferred at more than 145°C.

5. Process according to any of claims 1 to 4,
characterized in that the steaming, including the pressurization phase, takes at least 30 min and preferably not more than 160 min, especially preferred not more than 120 min.

6. Process according to any of claims 1 to 5,
characterized in that the moistened raw coffee is treated with saturated steam.

7. Process of any of claims 1 to 6,
characterized in that the raw coffee is initially adjusted to a moisture of between 16 % and 18 % and then is treated with saturated steam at a pressure of between 3.7 and 4 bar, preferably at about 3.9 bar and at a temperature of between 140°C and 145°C, preferably at 141°C to 142°C for 90 min to 150 min, preferably for about 120 min.

8. Process according to any of claims 1 to 6,
characterized in that the raw coffee is initially adjusted to a moisture content of between 16 % and 27 % and then is treated with saturated steam at a pressure of between 4.5 and 5.0 bar, preferably at about 4.7 bar and at a temperature of between 147°C and 153°C, preferably at about 148°C to 150°C for 90 min to 150 min, preferably for 120 min.

9. Process according to any of claims 1 to 8,
characterized in that the raw coffee is agitated during the treatment.

10. Process according to any of claims 1 to 9,
characterized in that the treated raw coffee is subsequently dried to a moisture content corresponding to the input moisture, preferably between about 10 % and 12 %.

11. Process according to any of claims 1 to 10,
characterized in that the raw coffee is a Robusta-raw coffee or an Arabica-raw coffee or a mixture thereof.

12. Use of the process according to any of claims 1 to 10, for improving the characteristic taste and/or aroma of the sorts of raw coffee of the Arabica type.

## Revendications

1. Procédé de traitement du café brut («rohkaffee») pour empêcher les pertes (« beeinträchtigungen ») de goût et d'arômes non typiques de l'espèce, en particulier lors du mûrissement, de la récolte et du processus de préparation, caractérisé en ce que le café brut est soumis d'abord à un taux d'humidité d'au moins 15% puis traité à la vapeur d'eau à une température supérieure à 100° C et à une pression d'au moins 2 bars jusqu'à ce que la perte de goût et d'arôme disparaisse de manière satisfaisante.

2. Procédé selon la revendication 1, caractérisé en ce que le café brut est soumis d'abord à un taux d'humidité d'au moins 16 % mais non supérieur à 35 %, et de préférence entre 16 % et 30 %, et en particulier entre 16 % et 27 %.

3. Procédé selon la revendication 1 ou 2, caractérisé en ce que le café brut est traité à une pression de préférence égale à au moins 3 bars et en particulier de préférence supérieure à 4 bars.

4. Procédé selon l'une quelconque des revendications 1 à 3, caractérisé en ce que le café brut est traité à une température d'au moins 130° C, de préférence d'au moins 140° C et en particulier de préférence supérieure à 145° C.

5. Procédé selon l'une quelconque des revendications 1 à 4, caractérisé en ce que le traitement à la vapeur, y compris la phase de montée en pression, dure au moins 30 min. et de préférence pas plus de 160 min., et en particulier de préférence pas plus de 120 min.

6. Procédé selon l'une quelconque des revendications 1 à 5, caractérisé en ce que le café brut humidifié est traité à la vapeur saturée.

7. Procédé selon l'une quelconque des revendications 1 à 6, caractérisé en ce que le café brut est d'abord soumis à une humidité comprise entre 16 % et 18 %, puis traité à la vapeur saturée à une pression comprise entre 3,7 et 4 bars, de préférence à une pression de 3,9 bars environ, et à une température comprise entre 140° C et 145° C, de préférence à une température comprise entre 141° C et 142° C, pendant 90 min. à 150 min., de préférence pendant 120 min. environ.

8. Procédé selon l'une quelconque des revendications 1 à 6, caractérisé en ce que le café brut est d'abord soumis à une humidité comprise entre 16 % et 27 %, puis traité à la vapeur saturée à une pression comprise entre 4,5 et 5,0 bars, de préférence à une pression d'environ 4,7 bars, et à une température comprise entre 147° C et 153° C, de préférence à une température comprise entre 148° C et 150° C, pendant 90 min. à 150 min., de préférence pendant 120 min. environ.

9. Procédé selon l'une quelconque des revendications 1 à 8, caractérisé en ce que le café brut est remué pendant le traitement.

10. Procédé selon l'une quelconque des revendications 1 à 9,caractérisé en ce que le café brut traité est ensuite séché pour atteindre un des taux d'humidité correspondant au taux initial, de préférence compris environ entre 10 % et 12 %.

11. Procédé selon l'une quelconque des revendications 1 à 10, caractérisé en ce que le café brut est un café brut de type Robusta ou un café brut de type Arabica ou un mélange des deux.

12. Utilisation du procédé selon l'une quelconque des revendications 1 à 10, pour améliorer le goût et/ou l'arôme, propre à l'espèce, des qualités de cafés bruts du type Arabica.
